# EUROPÄISCHE PATENTSCHRIFT

(11) **EP 1 612 468 B1**
(45) Veröffentlichungstag und Bekanntmachung des Hinweises auf die Patenterteilung: **07.03.2007**
(21) Anmeldenummer: 04015597.0
(22) Anmeldetag: 02.07.2004
(51) Int. Cl.: F16L 59/075, F16L 59/065

(54) **Leitungsrohr**
Pipe
Tuyau

(43) Veröffentlichungstag der Anmeldung: 04.01.2006
(73) Patentinhaber: BRUGG Rohr AG, Holding, 5200 Brugg (CH)
(72) Erfinder: Bolli, Anja, 7078 Lenzerheide (CH); Rudi, Roberto, 5107 Schinznach-Dorf (CH)

(56) Entgegenhaltungen:
- EP-A- 0 440 031
- WO-A-00/31459
- WO-A-03/098094
- DE-A- 19 914 963
- DE-U- 9 214 160
- US-A- 5 843 353
- US-A- 6 110 310

## Beschreibung

Die Erfindung betrifft ein vorgefertigtes wärmeisoliertes Leitungsrohr nach dem Oberbegriff des Anspruchs 1 sowie ein Verfahren zur Herstellung eines solchen Leitungsrohres nach dem Oberbegriff des Anspruchs 10.

Es sind werkseitig vorgefertigte wärmeisolierte Leitungsrohre für die direkte Erdverlegung, Freiverlegung und Verlegung in Gebäuden, insbesondere für den Transport von erwärmten oder gekühlten Medien bekannt, welche am Verlegeort miteinander verbunden werden.

Fernwärmerohre zu diesem Zweck sind beispielsweise in der CH-PS 410559 und der CH-PS 434910 beschrieben. Sie bestehen aus einem Mediumrohr aus Metall, welches koaxial mit Zwischenraum in einem nahtlosen Mantelrohr aus Polyethylen verläuft. Zur Wärmedämmung ist der Zwischenraum zwischen den beiden Rohren werksseitig mit einem in diesem Zwischenraum verschäumten Polyurethankörper ausgefüllt, welcher aufgrund einer Verklebung mit dem Mediumrohr und dem Mantelrohr eine Einheit mit diesen bildet. Derartige Leitungsrohre werden in der Fachwelt als Kunststoffmantelrohre bezeichnet.

Der Vorteil dieser bekannten Rohre liegt darin, daß diese kostengünstig herstellbar sind. Ein Nachteil besteht darin, daß die Kosten bei der Verlegung sehr hoch zu Buche schlagen und daß die Verbindungsstellen oft nicht fachgerecht ausgeführt werden und es dann zu einem Feuchtigkeitseinbruch kommen kann.

Ein weiterer Nachteil besteht darin, daß der bei Kunststoffmantelrohren verwendete Polyurethanschaum vielfach nicht die gewünschten Dämmwerte aufweist, sodaß die Wanddicke der Wärmedämmschicht erhöht werden muß, damit der geforderten Dämmwerte erreicht werden. Weiterhin ist nachteilig, daß die Standfestigkeit bzw. Beständigkeit des Polyurethanschaums bei Temperaturen oberhalb von 130 °C abnimmt, sodaß Medien mit einer Temperatur oberhalb von 130 °C mit Kunststoffmantelrohren nicht mehr transportiert werden können, weil dann im Laufe der Jahre Schäden sowohl in der Dämmschicht als auch bei den Mantelrohren aus Polyethylen auftreten können.

Aus dem DE-GM 9 214 160 ist zur Behebung dieser Nachteile vorgeschlagen worden, zwischen dem Mediumrohr und dem Schaumstoffkörper eine Kernisolierung aus einem hitzebeständigen Material vorzusehen. Nach einer Ausgestaltung der Kernisolierung besteht diese aus einem Rohr aus Keramikfasern, beispielsweise aus Aluminiumsilikat. Die Dicke des Rohres aus Keramikfasern ist so bemessen, daß an der Grenzfläche Kernisolierung/Wärmedämmkörper eine Temperatur von 125 °C nicht überschritten wird.

Der vorliegenden Erfindung liegt die Aufgabe zugrunde, ein wärmeisoliertes Leitungsrohr der eingangs erwähnten Art dahingehend zu verbessern, daß gegenüber einer einheitlichen Schicht aus Polyurethan ein wesentlich höherer Dämmwert des isolierten Leitungsrohres erzielt wird.

Diese Aufgabe wird durch die im Kennzeichen des Anspruchs 1 erfaßten Merkmale bzw. die kennzeichnenden Merkmale des Anspruchs 12 gelöst.

Der wesentliche Vorteil der Erfindung ist darin zu sehen, daß der Dämmwert der bandförmigen Umhüllung aufgrund der Kombination von pulvrigem Material und Vakuum extrem niedrig ist und somit die Wanddicke des Wärmedämmkörpers herabgesetzt werden kann. Die die Umhüllung bildenden Paneelen sind in sich geschlossene Behältnisse, in welchen das pulvrige Material befindlich ist und welche evakuiert sind. Auf diese Weise lassen sich extrem hohe Wärmedämmwerte erzielen.

Weitere vorteilhafte Ausgestaltungen der Erfindung sind in den Unteransprüchen erfaßt.

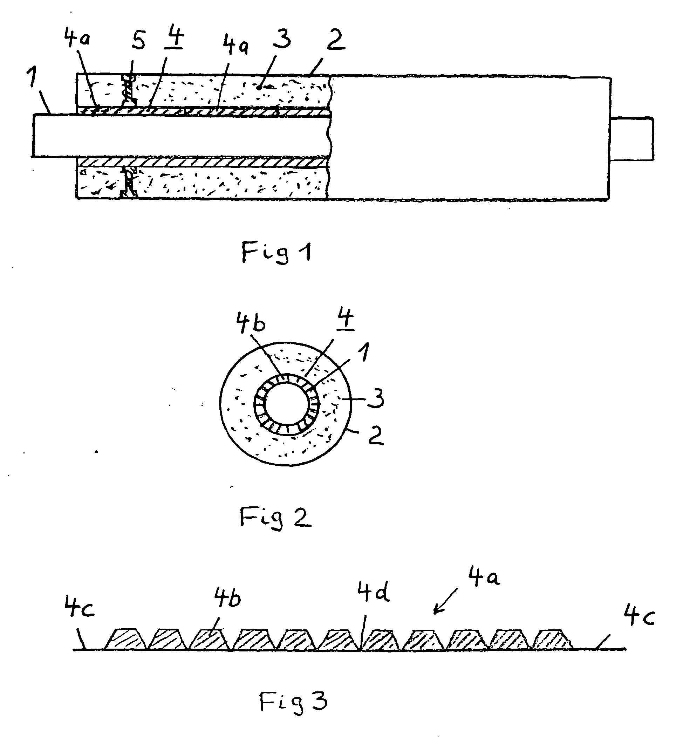

Die Erfindung ist anhand der in den Figuren 1, 2 und 3 schematisch dargestellten Ausführungsbeispiele näher erläutert.

Die Fig. 1 zeigt ein Leitungsrohr nach der Lehre der Erfindung, welches in der linken Hälfte im Schnitt dargestellt ist.

Das Leitungsrohr besteht aus einem Mediumrohr 1, beispielsweise aus Stahl, welches konzentrisch in einem Mantelrohr 2, beispielsweise aus Kunststoff angeordnet ist.

Mit 3 ist ein Wärmedämmkörper bezeichnet, der zwischen dem Mediumrohr 1 und dem Mantelrohr 2 angeordnet ist.

Auf dem Mediumrohr 1 ist eine bandförmige Umhüllung 4 angeordnet, die aus Paneelen 4a besteht, welche mit pulvrigem Material gefüllt sind. Zusätzlich sind die Paneelen noch evakuiert. Als pulvriges Material wird bevorzugt pulvriges, amorphes Siliziumdioxid verwendet, welches auch als hochdispersive Kieselsäure bezeichnet wird.

Auf der bandförmigen Umhüllung 4 sitz noch ein Abstandshalter 5.

Wie oben bereits erwähnt, besteht die bandförmige Umhüllung 4 aus mehreren Paneelen 4a, die um das Mediumrohr 1 mit überlappenden Bandkanten herumgeformt werden. Die überlappenden Bandkanten werden miteinander verklebt oder verschweißt. Jede Paneele 4a hat eine Länge von ca. 0,50 bis 1,0 m. Die Paneelen 4a werden dicht an dicht auf das Mediumrohr 1 aufgelegt. Die Wandung jeder Paneele 4a besteht aus einer kunststoffbeschichteten Aluminiumfolie, damit innerhalb der Paneele 4a ein Vakuum über einen möglichst langen Zeitraum aufrechterhalten werden kann.

Neben der Kieselsäure können im Innern jeder Paneele 4a noch ein Härtungsmittel, ein Trübungsmittel sowie Fasermaterial vorhanden sein.

Die Wanddicke der Paneele 4a beträgt in etwa 10 bis 20 mm.

Figur 2 zeigt einen Schnitt durch das Leitungsrohr nach Figur 1. Hier ist zu erkennen, daß die bandförmige Umhüllung 4 bzw. die Paneele 4a eine Vielzahl von in Längsrichtung des Mediumrohres 1 verlaufenden Kammern 4b aufweist.

In Figur 3 ist eine Paneele 4a im flach ausgelegten Zustand gezeigt. Es sind die einzelnen Kammern 4b zu erkennen, die mit der Kieselsäure und den weiteren Materialien gefüllt sowie evakuiert sind. Die Wandung der Paneele 4a besteht aus einer kunststoffbeschichteten Aluminiumfolie. Als Kunststoff wird bevorzugt ein Copolymer des Polyethylens verwendet. Dadurch lassen sich die Längskanten 4c miteinander durch Wärmezufuhr verkleben.

Zwischen den einzelnen Kammern 4b sind nicht näher bezeichnete V-förmige Freiräume vorgesehen, damit eine Formung der Paneele 4a um das Mediumrohr 1 problemlos durchgeführt werden kann.

Zumindest eine der Längskanten 4c der Paneele 4a ist doppelwandig ausgebildet, d. h. hier sind zwei Lagen der kunststoffbeschichteten Aluminiumfolie übereinander angeordnet und miteinander verklebt oder verschweißt. Am Fuß 4d der V-förmigen Freiräume sind die beiden Lagen der kunststoffbeschichteten Aluminiumfolie ebenfalls miteinander verklebt.

Der trapezförmige Querschnitt der Kammern 4b bleibt dadurch erhalten, daß sich neben dem Siliziumdioxid noch ein das Siliziumdioxidpulver verklebendes Härtungsmittel innerhalb der Kammern 4b befindet.

Die Herstellung des in den Figuren 1 und 2 schematisch dargestellten Leitungsrohres läuft wie folgt ab:
Zunächst wird ein Mediumrohr 1 z. B. mit einer Länge von 6 bis 10 m bereitgestellt. Auf das Mediumrohr wird dann eine erste Paneele 4a herumgelegt, und die überlappenden Bandkanten 4c werden miteinander verklebt. Sodann wird in gleicher Weise eine zweite Paneele direkt an die erste Paneele anschließend um das Mediumrohr 1 herumgelegt und die Bandkanten miteinander verklebt. Weitere Paneelen werden in gleicher Weise auf das Mediumrohr 1 aufgelegt. Die Rohrenden bleiben frei. Das mit den Paneelen versehene Mediumrohr 1 wird dann in ein Kunststoffrohr 2 eingeführt und durch einen oder mehrere Abstandhalter 5 in konzentrischer Lage zum Kunststoffrohr 2 gehalten. Der zwischen Mediumrohr 1 und Kunststoffrohr 2 befindliche Ringraum wird dann in an sich bekannter Weise mit Polyurethanschaum oder Polyisocyanuratschaum ausgeschäumt.

## Patentansprüche

1. Vorgefertigtes wärmeisoliertes Leitungsrohr, bestehend aus einem Mediumrohr (1), das koaxial mit Zwischenraum in einem Mantelrohr (2) aus Kunststoff verläuft, wobei der Zwischenraum zwischen dem Mediumrohr (1) und dem Mantelrohr (2) einen in diesem Raum verschäumten Schaumstoffkörper (3) als Wärmedämmung enthält und zwischen dem Mediumrohr (1) und dem Schaumstoffkörper (3) eine Kernisolierung aus einem anorganischen hitzebeständigem Material vorgesehen ist, mit folgenden Merkmalen:
a) die Kernisolierung besteht aus einer bandförmigen Umhüllung (4) aus mehreren hintereinander liegenden Paneelen (4a) mit in Längsrichtung des Mediumrohres (1) verlaufendem Längsschlitz,
b) die Paneele (4a) sind mit einem körnigen oder pulverförmigen Material gefüllt,
c) die Wandung der Paneele (4a) bestehen aus einer kunststoffbeschichteten Aluminiumfolie und
d) die Paneele (4a) sind evakuiert.

2. Leitungsrohr nach Anspruch 1, **dadurch gekennzeichnet, daß** die Paneele (4a) mit pulvrigem, amorphem Siliziumdioxid gefüllt sind.

3. Leitungsrohr nach Anspruch 1 oder 2, **dadurch gekennzeichnet, daß** neben körnigem oder pulverförmigem Material noch Härtungsmittel, Trübungsmittel sowie Fasern innerhalb der Paneele (4a) vorhanden sind.

4. Leitungsrohr nach einem der Ansprüche 2 oder 3, **dadurch gekennzeichnet, daß** das amorphe Siliziumdioxid als pyrogene bzw. hochdispersive Kieselsäure vorliegt.

5. Leitungsrohr nach einem der Ansprüche 2 bis 4, **dadurch gekennzeichnet, daß** die bandförmige Umhüllung (4) eine Vielzahl von in Längsrichtung des Mediumrohres (1) verlaufenden Kammern (4b) aufweist, in welchen sich das Siliziumdioxid befindet.

6. Leitungsrohr nach einem der Ansprüche 1 bis 5, **dadurch gekennzeichnet, daß** die Längskanten (4c) der bandförmigen Umhüllung (4) einander überlappen.

7. Leitungsrohr nach einem der Ansprüche 1 bis 6, **dadurch gekennzeichnet, daß** die Wanddicke der bandförmigen Umhüllung (4) zwischen 5 mm - 25 mm liegt.

8. Leitungsrohr nach einem der Ansprüche 1 bis 7, **dadurch gekennzeichnet, daß** die einzelnen Paneele (4a) jeweils eine Länge von 0,50 bis 1,00 m aufweisen.

9. Leitungsrohr nach einem der Ansprüche 1 bis 8, **dadurch gekennzeichnet, daß** auf der bandförmigen Umhüllung (4) in bestimmten Abständen Abstandshalter (5) vorgesehen sind, welche das Mediumrohr (1) konzentrisch zum Mantelrohr (2) halten.

10. Verfahren zur Herstellung eines vorgefertigten wärmeisolierten Leitungsrohres, bestehen aus einem Mediumrohr, das koaxial mit Zwischenraum in einem Mantelrohr aus Kunststoff verläuft, wobei der Zwischenraum zwischen dem Mediumrohr und dem Mantelrohr einen in diesem Raum verschäumten Schaumstoffkörper als Wärmedämmung enthält und zwischen dem Mediumrohr und dem Schaumstoffkörper eine Kernisolierung aus einem anorganischen, hitzebeständigen Material vorgesehen ist, **dadurch gekennzeichnet, daß** auf das Mediumrohr eine bandförmige Umhüllung aus mehreren hintereinander angeordneten Paneelen mit in Längsrichtung verlaufendem Längsschlitz aufgelegt wird, in welchen ein körniges oder pulverförmiges Material befindlich ist und welches evakuiert ist, wobei die Wandung der Paneele aus einer kunststoffbeschichteten Aluminiumfolie besteht, daß auf die bandförmige Umhüllung Abstandshalter aufgebracht werden, daß das mit der bandförmigen Umhüllung und den Abstandshaltern versehene Mediumrohr in ein Mantelrohr eingeführt wird und daß der Ringspalt zwischen der bandförmigen Umhüllung und dem Mantelrohr ausgeschäumt wird.

11. Verfahren nach Anspruch 10, **dadurch gekennzeichnet, daß** der Ringspalt mit einem Schaumstoff auf der Basis von Polyurethan oder Polyisocyanurat ausgeschäumt wird.

12. Verfahren nach einem der Ansprüche 10 bis 11, **dadurch gekennzeichnet, daß** die Längskanten der Paneele einander überlappend miteinander verklebt werden.

13. Verfahren nach einem der Ansprüche 10 bis 12, **dadurch gekennzeichnet, daß** die Längskanten der bandförmigen Umhüllung mit einem Klebeband fixiert werden.

## Claims

1. Prefabricated, thermally-insulated conduit consisting of a medium pipe (1) that runs coaxially with a gap in a plastic jacket pipe (2), whereby the gap between the medium pipe (1) and the jacket pipe (2) contains a foam body (3) foamed in this space as thermal insulation, and a core insulation consisting of an inorganic heat-resistant material is provided between the medium pipe (1) and the foam body (3), with the following features:
a) the core insulation consists of a band-shaped sheath (4) of a plurality of sequential panels (4a) with lengthwise slots running in the lengthwise direction of the medium pipe (1),
b) the panels (4a) are filled with a granular or powdered material,
c) the wall of the panels (4a) consists of a plastic-coated aluminum foil, and
d) the panels (4a) are evacuated.

2. Conduit according to claim 1, **characterized in that** the panels (4a) are filled with powdered, amorphous silicon dioxide.

3. Conduit according to claim 1 or 2, **characterized in that** in addition to granular or powdered material hardener, opacifier, and fibers are within the panels (4a).

4. Conduit according to one of claims 2 or 3, **characterized in that** amorphous silicon dioxide is present as a pyrogenic or highly-disperse silicic acid.

5. Conduit according to one of claims 2 to 4, **characterized in that** the band-shaped sheath (4) has a plurality of chambers (4b) running in the lengthwise direction of the medium pipe (1) in which the silicon dioxide is located.

6. Conduit according to one of claims 1 to 5, **characterized in that** the lengthwise edges (4c) of the band-shaped sheath (4) overlap each other.

7. Conduit according to one of claims 1 to 6, **characterized in that** the thickness of the walls of the band-shaped sheath (4) is between 5 mm and 25 mm.

8. Conduit according to one of claims 1 to 7, **characterized in that** the individual panels (4a) each have a length of 0.50 to 1.00 m.

9. Conduit according to one of claims 1 to 8, **characterized in that** spacers (5) are at specific distances on the band-shaped sheath (4), and said spacers concentrically hold the medium pipe (1) on the jacket pipe (2).

10. Method to manufacture a prefabricated, thermally-insulated conduit consisting of a medium pipe that runs coaxially with a gap in a plastic jacket pipe, whereby the gap between the medium pipe and the jacket pipe contains a foam body that is foamed within the space as thermal insulation, and core insulation consisting of inorganic heat-resistant material is provided between the medium pipe and the foam body , **characterized in that** a band-shaped sheath consisting of a plurality of sequential panels with lengthwise slots running in the lengthwise direction of the medium pipe is applied to the medium pipe, the sheath is filled with a granular or powdered material and the sheath is evacuated, the wall of the panels consists of a plastic-coated aluminum foil, spacers are on the band-shaped sheath, the medium pipe that is provided with the band-shaped sheath and spacers is inserted into a jacket pipe, and the annular gap between the band-shaped sheath and jacket pipe is filled with foam.

11. Method according to claim 10, **characterized in that** the annular gap is filled with a foam based on polyurethane or polyisocyanurate.

12. Method according to one of claims 10 to 11, **characterized in that** the overlapping lengthwise edges of the panels are glued to each other.

13. Method according to one of claims 10 to 12, **characterized in that** the lengthwise edges of the band-shaped sheath are fixed with an adhesive tape.

## Revendications

1. Tubulure préfabriquée thermo-isolée, comprenant un tube (1) vecteur de fluide en position coaxiale par rapport à un tube enveloppe (2) en matière synthétique, séparés par une cavité, la cavité située entre le tube (1) vecteur de fluide et le tube enveloppe (2) contenant un corps (3) en matériau mousse moussé dans cette cavité et faisant effet d'isolant thermique, une âme isolante étant prévue entre le tube (1) vecteur de fluide et le corps (3) en matériau mousse, cette âme isolante se composant d'un matériau inorganique résistant à la chaleur, présentant les propriétés suivantes :
a) l'âme isolante se compose d'une enveloppe (4) en forme de ruban fait de plusieurs panneaux (4a) reposant les uns derrière les autres, avec une fente allant dans la direction longitudinale du tube (1) vecteur de fluide,
b) les panneaux (4a) sont remplis d'un matériau granuleux ou pulvérulent,
c) les parois des panneaux (4a) se composent d'une feuille d'aluminium revêtue de matière synthétique et
d) les panneaux (4a) ont été mis sous vide.

2. Tubulure selon la revendication 1, **caractérisée en ce que** les panneaux (4a) sont remplis de dioxyde de silicium pulvérulent amorphe.

3. Tubulure selon la revendication 1 ou 2, **caractérisée en ce que** se trouvent à l'intérieur des panneaux 4a, outre un matériau granuleux ou pulvérulent, un matériau durcissant, un matériau opacifiant, ainsi que des fibres.

4. Tubulure selon l'une des revendications 2 ou 3, **caractérisée en ce que** le dioxyde de silicium amorphe est présent sous forme d'acide silicique pyrogène et/ou hautement dispersif.

5. Tubulure selon l'une quelconque des revendications 2 à 4, **caractérisée en ce que** l'enveloppe (4) en forme de ruban présente plusieurs chambres (4b) d'un tracé dans la direction longitudinale du tube (1) vecteur de fluide, dans lesquelles se trouve le dioxyde de silicium.

6. Tubulure selon l'une quelconque des revendications 1 à 5, **caractérisée en ce que** les bords longitudinaux (4c) de l'enveloppe (4) en forme de ruban se chevauchent.

7. Tubulure selon l'une quelconque des revendications 1 à 6, **caractérisée en ce que** l'épaisseur de paroi de l'enveloppe (4) en forme de ruban est comprise entre 5 et 25 mm.

8. Tubulure selon l'une quelconque des revendications 1 à 7, **caractérisée en ce que** les différents panneaux (4a) présentent chacun une longueur de 0,50 à 1,00 m.

9. Tubulure selon l'une quelconque des revendications 1 à 8, **caractérisée en ce que** sont prévus, sur l'enveloppe (4) en forme de ruban et à certaines distances l'un de l'autre, des écarteurs (5) maintenant le tube (1) vecteur de fluide en position concentrique par rapport au tube enveloppe (2).

10. Procédé de fabrication d'une tubulure thermo-isolée préfabriquée comprenant un tube vecteur de fluide disposé de façon coaxiale par rapport à un tube enveloppe en matière synthétique et séparé de celui-ci par une cavité, sachant que la cavité intermédiaire située entre le tube vecteur de fluide et le tube enveloppe contient un corps en matériau mousse moussé dans cette cavité et faisant office d'isolant thermique, et qu'est prévue, entre le tube vecteur de fluide et le corps en matériau mousse, une âme isolante en matériau inorganique résistant à la chaleur, **caractérisé en ce qu'**est posée sur le tube vecteur de fluide une enveloppe en forme de ruban composée de plusieurs panneaux disposés les uns derrière les autres et comportant une fente longitudinale dans la direction longitudinale de la tubulure, panneaux mis sous vide et dans lesquels se trouve un matériau granuleux ou pulvérulent, la paroi des panneaux se composant d'une feuille d'aluminium revêtue de matière synthétique, **en ce que** sur l'enveloppe en forme de ruban sont fixés des écarteurs, **en ce que** l'on introduit le tube vecteur de fluide, pourvu de l'enveloppe en forme de ruban et des écarteurs, dans un tube enveloppe et que l'interstice annulaire situé entre l'enveloppe en forme de ruban et le tube enveloppe est comblé par de la mousse.

11. Procédé selon la revendication 10, **caractérisé en ce que** l'interstice annulaire est comblé par moussage d'un matériau mousse à base de polyuréthane ou de poly-isocyanurate.

12. Procédé selon l'une des revendications 10 et 11, **caractérisé en ce que** l'on colle les bords longitudinaux des panneaux en chevauchement réciproque.

13. Procédé selon l'une quelconque des revendications 10 à 12, **caractérisé en ce que** l'on fixe les bords longitudinaux de l'enveloppe en forme de ruban à l'aide d'un ruban adhésif.
